# EUROPÄISCHE PATENTSCHRIFT

(11) **EP 3 029 828 B1**
(45) Veröffentlichungstag und Bekanntmachung des Hinweises auf die Patenterteilung: **13.05.2020**
(21) Anmeldenummer: 15197703.0
(22) Anmeldetag: 03.12.2015
(51) Int. Cl.: H02P 27/00, H02P 5/74, H02P 3/22

(54) **MOTORSTEUERUNG**
MOTOR CONTROL
COMMANDE DE MOTEUR

(30) Priorität: 04.12.2014 DE 102014117930
(43) Veröffentlichungstag der Anmeldung: 08.06.2016
(73) Patentinhaber: Schneider Electric Automation GmbH, 97828 Marktheidenfeld (DE)
(72) Erfinder: Pöhler, Stefan, 97297 Waldbuettelbrunn (DE)
(74) Vertreter: Manitz Finsterwald Patent- und Rechtsanwaltspartnerschaft mbB

(56) Entgegenhaltungen:
- DE-A1-102004 006 023
- US-A1- 2007 013 325
- US-A1- 2008 231 219
- US-A1- 2014 111 066

## Beschreibung

Die vorliegende Erfindung betrifft eine Motorsteuerung mit einem ersten Inverter und einem ersten Motor, welcher elektrisch mit dem ersten Inverter verbunden ist. Die Motorsteuerung umfasst ferner zumindest einen zweiten Inverter und zumindest einen zweiten Motor, welcher elektrisch mit dem zweiten Inverter verbunden ist. Die Inverter sind dabei ausgebildet, die jeweiligen Motoren jeweils mittels zumindest eines ersten und eines zweiten Schaltzustandes anzusteuern.

Inverter, das heißt Wechselrichter, dienen in allen Bereichen der elektrischen Antriebstechnik dazu, insbesondere Drehstromantriebe zu betreiben. Motorsteuerungen mit Invertern werden dementsprechend in einer Vielzahl von Anwendungen eingesetzt, beispielsweise bei der Automatisierung von Industrieprozessen oder in Robotern.

Beim Betrieb eines elektrischen Motors durch einen Inverter schaltet der Inverter zwischen verschiedenen Schaltzuständen um, um eine Welle des Motors in Rotation zu versetzen oder um ein bestimmtes Haltemoment einzuprägen. Genauer gesagt erzeugt der Inverter derart eine Spannung am Motor, dass ein elektrischer Strom im Motor fließt. Aufgrund des elektrischen Stroms wird ein Drehmoment erzeugt, welches eine Welle des Motors in Rotation versetzen kann.

Beim Umschalten zwischen den verschiedenen Schaltvorgängen kann ein unerwünschtes elektrisches Gleichtaktrauschen (common mode noise) an den Anschlussleitungen des Motors und im Motor selbst entstehen. Dieses Rauschen muss durch elektrische Filter entfernt werden, um die elektromagnetische Verträglichkeit (EMV) der Motorsteuerung sicherzustellen. Nachteiligerweise werden durch das Vorsehen solcher Filter zusätzliche elektrische Bauelemente benötigt, welche die Kosten für die Motorsteuerung steigern.

Insbesondere in dem Fall, dass der Motor stillstehen soll und drehmomentfrei ist, wird an den Motoranschlüssen von dem Inverter alternierend an allen Motoranschlüssen eine maximale Spannung und anschließend eine Spannung von Null angelegt. In beiden Fällen ist die resultierende Spannung am Motor (d.h. zwischen zwei Motorphasen) jeweils Null. Jedoch ist die Spannung zwischen den Motoranschlüssen und einem Schutzleiter, wie zum Beispiel einer Schirmung des Motorkabels ungleich Null. Hat der Inverter alle Motoranschlüsse auf die maximale Spannung geschaltet, so ist die Spannung zwischen der Schirmung und dem Motorkabel etwa die Hälfte der Spannung der Stromversorgung des Inverters. Liegt jeweils eine Spannung von 0 Volt an den Motoranschlüssen an, so ist die Spannung zwischen dem Motorkabel und der Schirmung negativ und beträgt wiederum die Hälfte der Versorgungsspannung des Inverters.

Schaltet der Inverter nun schnell zwischen der maximalen Spannung und einer Spannung von Null um, so entsteht eine hochfrequente Änderung der Polarität der Spannung zwischen der Schirmung und den Motoranschlüssen. In der Folge wird aufgrund parasitärer Kapazitäten zwischen der Schirmung des Motorkabels und den Motoranschlüssen ein unerwünschter hochfrequenter Strom generiert. Dieser hochfrequente Strom stellt ein Rauschen dar, das wiederum durch entsprechend dimensionierte Filter beseitigt werden muss.

Aus der DE 10 2004 006 023 A1 ist eine Motorsteuerung gemäß dem Oberbegriff des Anspruchs 1 bekannt. Die Motorsteuerung verwendet Schaltschemata, bei welchen der Nullvektor so gewählt wird, dass eine Phase mit maximalem Strom nicht umgeschaltet wird.

Es ist die der Erfindung zugrundeliegende Aufgabe, eine Motorsteuerung anzugeben, die unerwünschtes Rauschen und damit unerwünschte parasitäre Ströme bei Schaltvorgängen der Motorsteuerung reduziert.

Diese Aufgabe wird durch eine Motorsteuerung gemäß Anspruch 1 gelöst. Die Inverter sind dazu ausgebildet bei einem Umschalten eines Inverters in den ersten Schaltzustand den anderen Inverter zeitgleich in den zweiten Schaltzustand umzuschalten, wobei die Inverter ausgebildet sind in dem ersten und in dem zweiten Schaltzustand an dem jeweiligen Motor eine Spannung von Null anzulegen.

In dem ersten und in dem zweiten Schaltzustand ist die Spannung zwischen den Motorphasen also jeweils Null. Dies kann beispielsweise durch Anlegen der maximalen Inverterspannung an allen Phasen eines Motors erfolgen. Alternativ kann an allen Phasen eines Motors auch die Spannung Null angelegt werden. Der erste und der zweite Schaltzustand werden auch als Nullzustände bezeichnet.

Die Erfindung macht sich die Erkenntnis zunutze, dass bei dem gleichzeitigen Betrieb zweier Motoren mittels zweier Inverter der erste und der zweite Schaltzustand als "entgegengesetzte" Schaltzustände ausgenutzt werden können, wodurch beim gleichzeitigen Umschalten die Störungen des einen Umschaltvorgangs die Störungen des andere Umschaltvorgangs neutralisieren können. Genauer gesagt kann beim Umschalten des ersten Motors in den ersten Schaltzustand eine Störung (d.h. ein Rauschen) mit einer bestimmten Polarität entstehen. Beim Umschalten des zweiten Motors in den zweiten Schaltzustand entsteht wiederum eine Störung, die wegen der entgegengesetzten Schaltzustände eine Polarität aufweist, die der ersten Störung entgegensteht. Aufgrund des zeitgleichen Umschaltens des ersten und des zweiten Inverters können sich die Störungen gegenseitig aufheben, wodurch das Gesamtrauschen der Motorsteuerung verringert wird. Dadurch können die Filter zur Sicherstellung der elektromagnetischen Verträglichkeit kleiner und damit kostengünstiger ausgeführt werden, wodurch sich ein wirtschaftlicher Vorteil für die gesamte Motorsteuerung ergibt.

Im Betrieb kann die Motorsteuerung beispielsweise zwei Motoren im Stillstand halten, wobei an den Motoren kein Drehmoment anliegt. Dazu wird jeder Motor ständig zwischen dem ersten und dem zweiten Schaltzustand umgeschaltet, wobei jeweils der erste Motor zu einem Zeitpunkt mit dem ersten Schaltzustand angesteuert wird, während der zweite Motor mit dem zweiten Schaltzustand angesteuert wird. Beim Wechsel des ersten Motors in den zweiten Schaltzustand wechselt der zweite Motor zeitgleich in den ersten Schaltzustand. Auf diese Weise heben sich bei jedem Wechsel der Schaltzustände die entstehenden Störungen gegenseitig auf.

Unter einem zeitgleichen Umschalten werden Umschaltvorgänge verstanden, welche zeitlich um weniger als 1 µs, bevorzugt um weniger als 100 ns, besonders bevorzugt um weniger als 10 ns, versetzt sind. Alternativ kann von einem zeitgleichen Umschalten gesprochen werden, wenn der zeitliche Versatz der Umschaltvorgänge kleiner als 5 %, bevorzugt kleiner als 0,5 %, der Zeitdauer zwischen zwei Schaltvorgängen eines Inverters ist.

Die Motorsteuerung kann die Motoren auch mit zusätzlichen spannungsbildenden Schaltzuständen betreiben, um z.B. eine Rotation der Welle des Motors zu ermöglichen. Bei einem Umschalten von einem spannungsbildenden Schaltzustand in den ersten oder zweiten Schaltzustand kann dann ein zeitgleiches Umschalten des jeweils anderen Motors in den anderen Nullzustand erfolgen.

Bei den Motoren kann es sich um Elektromotoren handeln, insbesondere um Drehstrommotoren, wie zum Beispiel Asynchronmotoren, Synchronmotoren oder bürstenlose Gleichstrommotoren.

Werden mehr als zwei Motoren und damit auch mehr als zwei Inverter verwendet, so kann jeweils aus zwei Motoren ein Paar gebildet werden, wobei das oben beschriebene Vorgehen bei einem Umschalten eines Inverters in den ersten Schaltzustand auf das jeweilige Motorpaar angewandt wird. Die Inverter können demnach ausgebildet sein, jeweils Paare von Invertern zu bilden und bei einem Umschalten eines Inverters in den ersten Schaltzustand den anderen Inverter zeitgleich in den zweiten Schaltzustand umzuschalten.

Insbesondere kann das Umschalten mit einer Frequenz im Bereich von 150 kHz bis 30 MHz erfolgen. Zudem können die Inverter ausgebildet sein, die Motoren mittels einer Pulsweitenmodulation (PWM) zu betreiben. Bei dem zeitgleichen Umschalten eines Inverters in den ersten Schaltzustand und des anderen Inverters in den zweiten Schaltzustand kann somit von einer invertierten PWM gesprochen werden.

Die Motorsteuerung kann auch als Mehrachs-Inverter bezeichnet werden, wobei die Inverter beispielsweise in einem gemeinsamen Gehäuse angeordnet sind. Alternativ können die Inverter auch separat, das heißt zueinander beabstandet, angeordnet sein.

Vorteilhafte Weiterbildungen der Erfindung sind der Beschreibung, den Unteransprüchen und den Zeichnungen zu entnehmen.

Gemäß einer ersten vorteilhaften Ausführungsform weisen die Inverter eine gemeinsame Stromversorgung auf, welche die Inverter mit elektrischer Energie, insbesondere mit einem Gleichstrom, versorgt. Die Inverter sind also an denselben Zwischenkreis elektrisch angeschlossen, wodurch der beim Umschalten zwischen den Schaltzuständen entstehende parasitäre hochfrequente Strom sich für sämtliche Inverter stark ähnelt. Das gegenseitige Neutralisieren der Störungen wird somit weiter verbessert.

Die Inverter sind jeweils durch drei elektrische Verbindungen mit dem jeweiligen Motor verbunden, wobei jede Verbindung separat auf ein hohes Potential und ein niedriges Potential schaltbar ist. In dem ersten Schaltzustand alle Verbindungen auf das niedrige Potential und in dem zweiten Schaltzustand alle Verbindungen auf das hohe Potential geschaltet.

Es können somit dreiphasige Inverter und dreiphasige Motoren verwendet werden. Die Inverter werden von dem Zwischenkreis mit einer Versorgungsspannung versorgt, wobei entweder die Versorgungsspannung oder das Masse-Potential des Zwischenkreises an jede elektrische Verbindung des mit dem Inverter verbundenen Motors durchschaltbar ist. Das Durchschalten erfolgt bevorzugt mittels IGBTs (Insulated Gate Bipolar Transistor). Insbesondere kann jeder Inverter sechs IGBTs aufweisen, mit welchen insgesamt acht Schaltzustände realisierbar sind. Der erste Schaltzustand wird dabei als Z⁰ und der zweite Schaltzustand als Z⁷ bezeichnet. Die weiteren Schaltzustände Z¹, Z², Z³, Z⁴, Z⁵ und Z⁶ sind die sogenannten spannungsbildenden Zustände. In den Nullzuständen ist die Spannung zwischen den Motorphasen jeweils Null.

Gemäß einer weiteren vorteilhaften Ausführungsform sind die Inverter mittels eines Datenbusses, insbesondere mittels eines Feldbusses, miteinander verbunden, wobei ein Umschalten eines Inverters dem anderen Inverter oder den anderen Invertern mittels des Datenbusses mitgeteilt wird. Bei dem Feldbus kann es sich um einen CAN-Bus (Controller Area Network Bus), eine Sercos 3 Schnittstelle, eine "Industrial Ethernet"-Verbindung oder einen EtherNet/IP-Bus handeln.

Ein jeweiliger Umschaltvorgang kann also mittels des Datenbusses zur Zeit des Umschaltens oder eine vorbestimmte Zeitdauer vor dem Umschalten den anderen Invertern mitgeteilt werden. Der Inverter kann dazu eine Steuereinheit mit einem Feldbusanschluss aufweisen. Auch kann beispielsweise eine geplante Ausführungszeit für einen Umschaltvorgang oder für eine Serie von Umschaltvorgängen mittels des Datenbusses an die anderen Inverter übertragen werden. Insbesondere wird ein Umschaltvorgang jeweils an sämtliche mit dem Datenbus gekoppelten Inverter übermittelt.

Alternativ kann eine Steuerleitung mit einer Flankensteuerung zur Synchronisation der Schaltvorgänge dienen. Gegebenenfalls kann der erste Inverter als "Master" der Steuerleitung und alle weiteren Inverter als "Slave" konfiguriert sein.

Gemäß einer weiteren vorteilhaften Ausführungsform sind die Inverter mit einer Synchronisationseinheit verbunden, die das zeitgleiche Umschalten der Inverter steuert. Die Synchronisationseinheit kann ebenfalls an den Datenbus angeschlossen sein, wobei die Synchronisationseinheit die Zeitpunkte für das Umschalten sämtlicher Inverter vorgeben kann. Zudem kann die Synchronisationseinheit Schaltvorgänge eines Inverters an die übrigen Inverter übermitteln.

Bevorzugt sind zwischen den Invertern und den jeweiligen Motoren elektrische Verbindungskabel vorgesehen, die jeweils im Wesentlichen die gleiche Länge aufweisen. Aufgrund der gleichen Länge der Motorkabel können die Motorkabel jeweils eine gleiche Kapazität und Induktivität besitzen, wodurch insbesondere die Frequenz der bei Umschaltvorgängen entstehenden Störungen für alle Motoren annähernd gleich ist. Die entstehenden Störungen sind somit für alle Motoren der Motorsteuerung sehr ähnlich, wodurch die gegenseitige Auslöschung der Störungen weiter verbessert wird.

Zudem können auch die Kabellängen im Zwischenkreis gleich sein. Dies bedeutet, die Anschlusskabel der Inverter in dem Zwischenkreis sind ebenfalls gleich. Weiter bevorzugt sind alle Inverter identisch und/oder alle Motoren identisch. Durch die Verwendung identischer Inverter und Motoren werden die Störungen ebenfalls angeglichen, wodurch die gegenseitige Neutralisierung der Störungen ebenfalls verbessert werden kann.

Die Erfindung betrifft außerdem ein Verfahren zur Steuerung zumindest zweier Motoren gemäß Anspruch 7.

Für das erfindungsgemäße Verfahren gelten die zu der erfindungsgemäßen Motorsteuerung getroffenen Aussagen entsprechend.

Nachfolgend werden Ausgestaltungen der Erfindung rein beispielhaft unter Bezugnahme auf die Zeichnungen beschrieben. Es zeigen:
- Fig. 1: eine schematische Ansicht einer Motorsteuerung;
- Fig. 2: schematisch das Entstehen eines parasitären Stroms; und
- Fig. 3: unerwünschte Ströme bei Schaltvorgängen von mehreren Motoren.

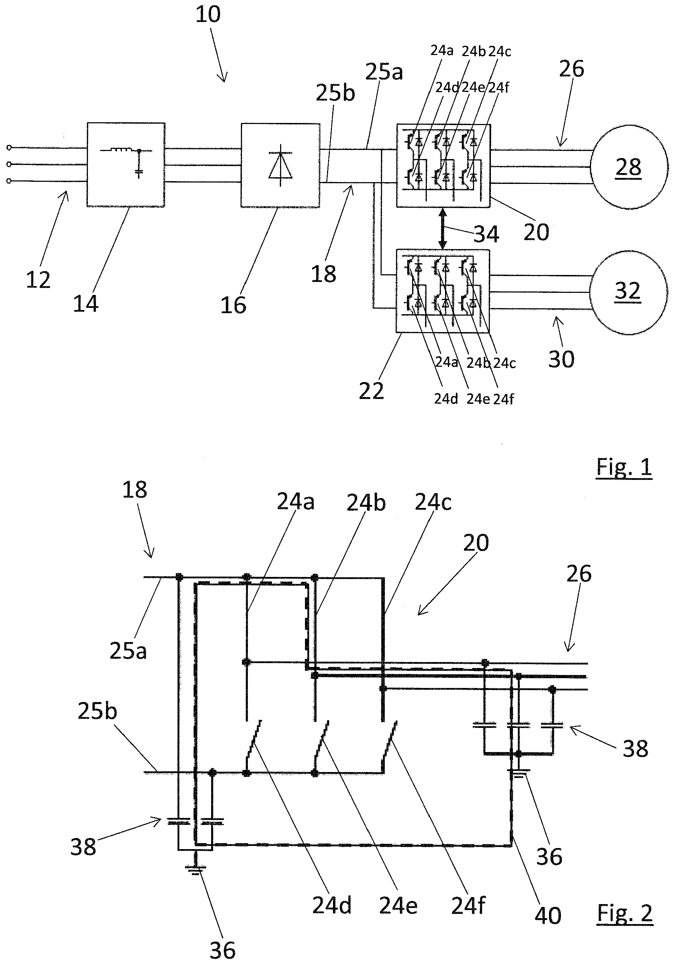

Fig. 1 zeigt schematisch eine Motorsteuerung 10, die von einem dreiphasigen Wechselstromanschluss 12 mit 400 Volt Spannung mit Strom versorgt wird. Der Wechselstromanschluss 12 umfasst einen EMV-Filter 14, welcher in der Motorsteuerung 10 entstehende Störungen unterdrückt, so dass diese nicht andere an dem Wechselstromanschluss 12 angeschlossene Geräte beeinträchtigen.

Nachgeschaltet dem EMV-Filter 14 ist eine Diodenbrücke 16 mit dem Wechselstromanschluss 12 elektrisch verbunden, welche aus der Wechselspannung des Wechselstromanschlusses 12 eine Gleichspannung von 560 Volt erzeugt und diese in einem Zwischenkreis 18 zur Verfügung stellt. Der Zwischenkreis 18 versorgt einen ersten Wechselrichter 20 und einen zweiten Wechselrichter 22 mit elektrischer Energie.

Jeder Wechselrichter 20, 22 umfasst sechs Schaltelemente 24, die als IGBTs oder CMOS-Transistoren ausgeführt sein können. Dabei sind drei "obere" Schaltelemente 24a, 24b, 24c ausgebildet ein hohes Potential 25a, also das Potential der Spannung von 560 Volt, des Zwischenkreises 18 durchzuschalten. Drei "untere" Schaltelemente 24d, 24e, 24f können ein niedriges Potential 25b des Zwischenkreises 18 durchschalten. Das niedrige Potential 25b entspricht dem Masse-Potential des Zwischenkreises 18.

Der erste Wechselrichter 20 ist mittels eines ersten Motorkabels 26 mit einem ersten Motor 28 dreiphasig elektrisch verbunden. Auf die gleiche Weise ist der zweite Wechselrichter 22 mittels eines zweiten Motorkabels 30 mit einem zweiten Motor 32 dreiphasig verbunden. Die Motorkabel 26, 30 und die Motoren 28, 32 sind jeweils identisch ausgebildet.

Der erste Wechselrichter 20 und der zweite Wechselrichter 22 sind ebenfalls identisch ausgeführt, umfassen jeweils einen Feldbusanschluss und kommunizieren mittels einer Sercos 3-Schnittstelle 34.

Im Folgenden soll ein Betriebszustand betrachtet werden, bei welchem sich der erste Motor 28 und der zweite Motor 32 nicht drehen und kein Drehmoment aufweisen. In diesem Betriebszustand schalten die Schaltelemente 24 der Wechselrichter 20, 22 jeweils gleichzeitig sämtliche Phasen der Motorkabel 26, 30 auf die Spannung des Zwischenkreises 18 oder auf das Masse-Potential des Zwischenkreises 18. Die Synchronisation der Schaltvorgänge erfolgt dabei mittels der Sercos 3-Schnittstelle 34.

Auf diese Weise sind zu einem Zeitpunkt entweder die drei oberen Schaltelemente 24a, 24b, 24c oder die drei unteren Schaltelemente 24d, 24e, 24f leitend geschaltet. Jeder Motor 28, 32 wird dabei hochfrequent alternierend mit sämtlichen Phasen auf das niedrige Potential 25b und anschließend auf das hohe Potential 25a geschaltet. Sind sämtliche Phasen eines Motors auf das niedrige Potential 25b geschaltet, so wird dies als erster Schaltzustand oder Schaltzustand Z⁰ bezeichnet. Sind alle Phasen eines Motors mit dem hohen Potential 25a elektrisch verbunden, wird von dem zweiten Schaltzustand oder Schaltzustand Z⁷ gesprochen. Schaltzustände, in welchen jeweils nur ein Teil der Phasen eines Motors auf das hohe Potential 25a oder das niedrige Potential 25b geschaltet sind, werden mit Z¹, Z², Z³, Z⁴, Z⁵ und Z⁶ bezeichnet.

Fig. 2 zeigt beispielhaft einen Z⁷ Schaltzustand für den ersten Inverter 20, in welchem die drei oberen Schaltelemente 24a, 24b, 24c leitend geschaltet sind. In dem Schaltzustand sind sämtliche Phasen des Motorkabels 26 mit dem hohen Potential 25a des Zwischenkreises 18 verbunden.

Zwischen einer (nicht gezeigten) Schirmung oder einem leitenden Gehäuse der Motorsteuerung 10 sind gegenüber einem Erdpotential 36 Kapazitäten 38 angeordnet, die dem Wechselrichter 20 zugeordnet sind und eine kapazitive Verbindung zwischen dem ersten Motorkabel 26 und dem Zwischenkreis 18 herstellen. Wegen der hochfrequenten Umschaltvorgänge durch die Schaltelemente 24 entsteht ein parasitärer Gleichtaktstrompfad 40, in welchem ein hochfrequenter Störstrom fließt, der auf den Wechselstromanschluss 12 rückwirken kann.

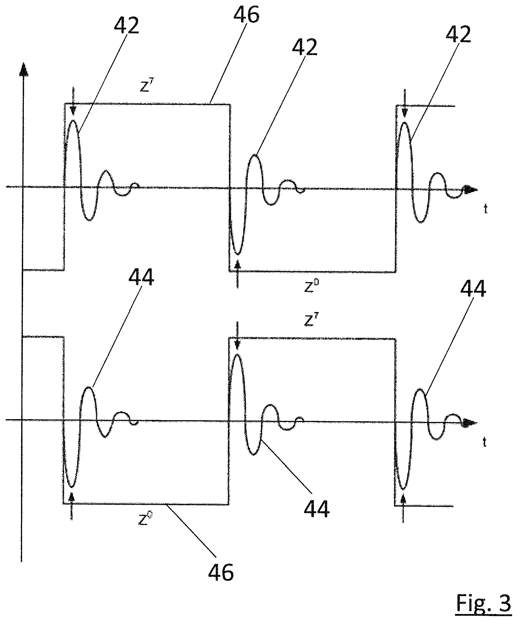

Der hochfrequente Störstrom ist in Fig. 3 in einem Diagramm eingetragen, wobei in dem Diagramm im oberen Bereich ein erster Störstrom 42 des ersten Wechselrichters 20 und im unteren Bereich ein zweiter Störstrom 44 des zweiten Wechselrichters 22 über die Zeit t angetragen ist.

Ebenfalls ist eine Gleichtaktspannung 46 für jeden Wechselrichter 20, 22 gegenüber der Zeit t angetragen, welche an den Motorkabeln 26, 30 gegenüber dem Erdpotential 36 anliegt. Die Gleichtaktspannung 46 wird von den Wechselrichtern 20, 22 bei Umschaltvorgängen zwischen den Nullzuständen Z⁰ und Z⁷ rechteckförmig verändert.

Aus Fig. 3 ist zu erkennen, dass die Störströme 42, 44 beim Umschalten eine Schwingung darstellen. Die Schwingung beim Umschalten in den Schaltzustand Z⁷ weist eine umgekehrte Polarität auf, wie die Schwingung beim Umschalten in den Schaltzustand Z⁰. Nach einem Umschalten fallen die Störströme 42, 44 zeitlich exponentiell ab.

Der erste Wechselrichter 20 und der zweite Wechselrichter 22 werden - wie Fig. 3 zeigt - so betrieben, dass eine Umschaltung jeweils invers erfolgt, das heißt beim Umschalten des ersten Wechselrichters 20 in den Schaltzustand Z⁷ schaltet der zweite Wechselrichter 22 zeitgleich in den Schaltzustand Z⁰. Da die Störströme gleich sind, heben sich die Störströme 42, 44 im Wesentlichen auf, wodurch der auf den Zwischenkreis 18 wirkende Störstrom stark reduziert wird. Dementsprechend kann auch der EMV-Filter 14 für geringere Störströme dimensioniert werden.

### Bezugszeichenliste

- 10: Motorsteuerung
- 12: Wechselstromanschluss
- 14: EMV-Filter
- 16: Diodenbrücke
- 18: Zwischenkreis
- 20: erster Wechselrichter
- 22: zweiter Wechselrichter
- 24: Schaltelement
- 25a: hohes Potential
- 25b: niedriges Potential
- 26: erstes Motorkabel
- 28: erster Motor
- 30: zweites Motorkabel
- 32: zweiter Motor
- 34: Sercos 3-Schnittstelle
- 36: Erdpotential
- 38: Kapazität
- 40: parasitärer Gleichtaktstrompfad
- 42: erster Störstrom
- 44: zweiter Störstrom
- 46: Gleichtaktspannung
- Z⁰: erster Schaltzustand
- Z⁷: zweiter Schaltzustand
- t: Zeit

## Patentansprüche

1. Motorsteuerung (10) mit
einem ersten Inverter (20),
einem ersten Motor (28), welcher elektrisch mit dem ersten Inverter (20) verbunden ist,
zumindest einem zweiten Inverter (22) und
zumindest einem zweiten Motor (32), welcher elektrisch mit dem zweiten Inverter (22) verbunden ist, wobei die Inverter (20, 22) ausgebildet sind, die jeweiligen Motoren (28, 32) jeweils mittels zumindest eines ersten und eines zweiten Schaltzustandes (Z⁰, Z⁷) anzusteuern,
wobei die Inverter (20, 22) ausgebildet sind, bei einem Umschalten eines Inverters (20, 22) in den ersten Schaltzustand (Z⁰) den anderen Inverter (20, 22) zeitgleich in den zweiten Schaltzustand (Z⁷) umzuschalten, wobei die Inverter (20, 22) ausgebildet sind in dem ersten und in dem zweiten Schaltzustand (Z⁰, Z⁷) an dem jeweiligen Motor (28, 32) eine Spannung von Null anzulegen, wobei
die Inverter (20, 22) jeweils durch drei elektrische Verbindungen mit dem jeweiligen Motor (28, 32) verbunden sind, wobei jede Verbindung separat auf ein hohes Potential (25a) und ein niedriges Potential (25b) schaltbar ist, **dadurch gekennzeichnet, dass** die Inverter (20,22) ausgebildet sind, in dem ersten Schaltzustand (Z⁰) alle Verbindungen auf das niedrige Potential (25b) und in dem zweiten Schaltzustand (Z⁷) alle Verbindungen auf das hohe Potential (25a) zu Schalten.

2. Motorsteuerung (10) nach Anspruch 1,
**dadurch gekennzeichnet, dass**
die Inverter (20, 22) eine gemeinsame Stromversorgung (18) aufweisen, welche die Inverter (20, 22) mit elektrischer Energie, insbesondere mit einem Gleichstrom, versorgt.

3. Motorsteuerung (10) nach zumindest einem der vorstehenden Ansprüche,
**dadurch gekennzeichnet, dass**
die Inverter (20, 22) mittels eines Datenbusses (34), insbesondere eines Feldbusses, miteinander verbunden sind, wobei ein Umschalten eines Inverters (20, 22) dem anderen Inverter (20, 22) oder den anderen Invertern (20, 22) mittels des Datenbusses (34) mitgeteilt wird.

4. Motorsteuerung (10) nach zumindest einem der vorstehenden Ansprüche,
**dadurch gekennzeichnet, dass**
die Inverter (20, 22) mit einer Synchronisationseinheit verbunden sind, die das zeitgleiche Umschalten der Inverter (20, 22) steuert.

5. Motorsteuerung (10) nach zumindest einem der vorstehenden Ansprüche,
**dadurch gekennzeichnet, dass**
zwischen den Invertern (20, 22) und den jeweiligen Motoren (28, 32) elektrische Verbindungskabel (26, 30) vorgesehen sind, die jeweils im Wesentlichen die gleiche Länge aufweisen.

6. Motorsteuerung (10) nach zumindest einem der vorstehenden Ansprüche,
**dadurch gekennzeichnet, dass**
alle Inverter (20, 22) identisch und/oder alle Motoren (28, 32) identisch sind.

7. Verfahren zur Steuerung zumindest zweier Motoren (28, 32) mittels zumindest zweier Inverter (20, 22), bei welchem
(a) ein erster Inverter (20) einen ersten Motor (28) betreibt,
(b) ein zweiter Inverter (22) einen zweiten Motor (32) betreibt und
(c) die Inverter (20, 22) die Motoren (28, 32) jeweils mittels zumindest eines ersten und eines zweiten Schaltzustandes (Z⁰, Z⁷) ansteuern, und
(d) bei einem Umschalten eines Inverters (20, 22) in den ersten Schaltzustand (Z⁰) ein anderer Inverter (20, 22) zeitgleich in den zweiten Schaltzustand (Z⁷) umgeschaltet wird, wobei die Inverter (20, 22) in dem ersten und in dem zweiten Schaltzustand (Z⁰, Z⁷) an dem jeweiligen Motor (28, 32) eine Spannung von Null anlegen, wobei
die Inverter (20, 22) jeweils durch drei elektrische Verbindungen mit dem jeweiligen Motor (28, 32) verbunden sind, wobei jede Verbindung separat auf ein hohes Potential (25a) und ein niedriges Potential (25b) schaltbar ist,
**dadurch gekennzeichnet, dass** in dem ersten Schaltzustand (Z⁰) alle Verbindungen auf das niedrige Potential (25b) und in dem zweiten Schaltzustand (Z⁷) alle Verbindungen auf das hohe Potential (25a) geschaltet werden.

## Claims

1. A motor control (10) comprising
a first inverter (20);
a first motor (28) which is electrically connected to the first inverter (20);
at least one second inverter (22); and
at least one second motor (32) which is electrically connected to the second inverter (22), with the inverters (20, 22) being configured to control the respective motors (28, 32) by means of at least a first and a second switching state (Z⁰, Z⁷) in each case,
wherein,
when one inverter (20, 22) is switched over into the first switching state (Z⁰), the inverters (20, 22) are configured to simultaneously switch over the other inverter (20, 22) into the second switching state (Z⁷), with the inverters (20, 22) being configured to apply a voltage of zero to the respective motor (28, 32) in the first and second switching states (Z⁰, Z⁷); and wherein
the inverters (20, 22) are each connected to the respective motor (28, 32) by three electrical connections, with each connection being separately switchable to a high potential (25a) and to a low potential (25b), **characterized in that** the inverters (20, 22) are configured to switch all the connections to the low potential (25b) in the first switching state (Z⁰) and to switch all the connections to the high potential (25a) in the second switching state (Z⁷).

2. A motor control (10) in accordance with claim 1,
**characterized in that**
the inverters (20, 22) have a common power supply (18) which supplies the inverters (20, 22) with electrical energy, in particular with a direct current.

3. A motor control (10) in accordance with at least one of the preceding claims,
**characterized in that**
the inverters (20, 22) are connected to one another by means of a data bus (34), in particular a field bus, with a switchover of one inverter (20, 22) being communicated to the other inverter (20, 22) or to the other inverters (20, 22) by means of the data bus (34).

4. A motor control (10) in accordance with at least one of the preceding claims,
**characterized in that**
the inverters (20, 22) are connected to a synchronization unit which controls the simultaneous switchover of the inverters (20, 22).

5. A motor control (10) in accordance with at least one of the preceding claims,
**characterized in that**
electrical connection cables (26, 30), which each have substantially the same length, are provided between the inverters (20, 22) and the respective motors (28, 32).

6. A motor control (10) in accordance with at least one of the preceding claims,
**characterized in that**
all the inverters (20, 22) are identical and/or all the motors (28, 32) are identical.

7. A method of controlling at least two motors (28, 32) by means of at least two inverters (20, 22), in which
(a) a first inverter (20) operates a first motor (28);
(b) a second inverter (22) operates a second motor (32);
(c) the inverters (20, 22) control the motors (28, 32) by means of at least a first and a second switching state (Z⁰, Z⁷) in each case; and,
(d) when one inverter (20, 22) is switched over into the first switching state (Z⁰), another inverter (20, 22) is simultaneously switched over into the second switching state (Z⁷), with the inverters (20, 22) applying a voltage of zero to the respective motor (28, 32) in the first and second switching states (Z⁰, Z⁷), wherein
the inverters (20, 22) are each connected to the respective motor (28, 32) by three electrical connections, with each connection being separately switchable to a high potential (25a) and to a low potential (25b), **characterized in that** all the connections are switched to the low potential (25b) in the first switching state (Z⁰) and all the connections are switched to the high potential (25a) in the second switching state (Z⁷).

## Revendications

1. Commande de moteur (10) comprenant
un premier onduleur (20),
un premier moteur (28) connecté électriquement au premier onduleur (20),
au moins un second onduleur (22) et
au moins un second moteur (32) connecté électriquement au second onduleur (22),
dans laquelle
les onduleurs (20, 22) sont réalisés pour piloter les moteurs respectifs (28, 32) au moyen d'au moins un premier et un second état de commutation respectif (Z⁰, Z⁷),
les onduleurs (20, 22) sont réalisés pour commuter, lors d'une commutation d'un onduleur (20, 22) vers le premier état de commutation (Z⁰), simultanément l'autre onduleur (20, 22) vers le second état de commutation (Z⁷),
les onduleurs (20, 22) sont réalisés pour appliquer une tension nulle au moteur respectif (28, 32), dans le premier et dans le second état de commutation (Z⁰, Z⁷),
les onduleurs (20, 22) sont chacun connectés au moteur respectif (28, 32) par trois connexions électriques, chaque connexion étant commutable séparément vers un potentiel élevé (25a) et vers un potentiel bas (25b),
**caractérisée en ce que**
les onduleurs (20, 22) sont réalisés pour commuter toutes les connexions vers le potentiel bas (25b), dans le premier état de commutation (Z⁰), et pour commuter toutes les connexions vers le potentiel élevé (25a), dans le second état de commutation (Z⁷).

2. Commande de moteur (10) selon la revendication 1,
**caractérisée en ce que**
les onduleurs (20, 22) présentent une alimentation électrique commune (18), qui alimente les onduleurs (20, 22) en énergie électrique, en particulier en courant continu.

3. Commande de moteur (10) selon l'une au moins des revendications précédentes,
**caractérisée en ce que**
les onduleurs (20, 22) sont connectés entre eux par un bus de données (34), en particulier par un bus de terrain, la commutation d'un onduleur (20, 22) étant communiquée à l'autre onduleur (20, 22) ou aux autres onduleurs (20, 22) par le biais du bus de données (34).

4. Commande de moteur (10) selon l'une au moins des revendications précédentes,
**caractérisée en ce que**
les onduleurs (20, 22) sont connectés à une unité de synchronisation qui commande la commutation simultanée des onduleurs (20, 22).

5. Commande de moteur (10) selon l'une au moins des revendications précédentes,
**caractérisée en ce que**
entre les onduleurs (20, 22) et les moteurs respectifs (28, 32) sont prévus des câbles de connexion électrique (26, 30) qui présentent chacun essentiellement la même longueur.

6. Commande de moteur (10) selon l'une au moins des revendications précédentes,
**caractérisée en ce que**
tous les onduleurs (20, 22) sont identiques et/ou tous les moteurs (28, 32) sont identiques.

7. Procédé de commande d'au moins deux moteurs (28, 32) au moyen d'au moins deux onduleurs (20, 22),
dans lequel
(a) un premier onduleur (20) fait fonctionner un premier moteur (28),
(b) un second onduleur (22) fait fonctionner un second moteur (32), et
(c) les onduleurs (20, 22) pilotent les moteurs respectifs (28, 32) au moyen d'au moins un premier et un second état de commutation respectif (Z⁰, Z⁷) et
(d) lors d'une commutation d'un onduleur (20, 22) vers le premier état de commutation (Z⁰), un autre onduleur (20, 22) est commuté simultanément vers le second état de commutation (Z⁷),
les onduleurs (20, 22) appliquent une tension nulle au moteur respectif (28, 32) dans le premier et dans le second état de commutation (Z⁰, Z⁷), et les onduleurs (20, 22) sont chacun connectés au moteur respectif (28, 32) par trois connexions électriques, chaque connexion étant commutable séparément vers un potentiel élevé (25a) et vers un potentiel bas (25b), **caractérisé en ce que**
toutes les connexions sont commutées vers le potentiel bas (25b), dans le premier état de commutation (Z⁰), et toutes les connexions sont commutées vers le potentiel élevé (25a), dans le second état de commutation (Z⁷).
